# EUROPÄISCHE PATENTSCHRIFT

(11) **EP 0 520 220 B1**
(45) Veröffentlichungstag und Bekanntmachung des Hinweises auf die Patenterteilung: **15.11.1995**
(21) Anmeldenummer: 92109418.1
(22) Anmeldetag: 04.06.1992
(51) Int. Cl.: C21D 9/30, C21D 1/10

(54) **Verfahren und Einrichtung zum induktiven Randschichthärten von Haupt- oder Hublagerzapfen an Kurbelwellen**
Method and device for inductive surface hardening of crankshaft journals and pins
Procédé et dispositif pour la trempe superficielle par induction de tourillons et de manetons de vilebrequins

(30) Priorität: 13.06.1991 DE 4119417
(43) Veröffentlichungstag der Anmeldung: 30.12.1992
(73) Patentinhaber: MERCEDES-BENZ AG, 70327 Stuttgart (DE); INDUKTIONSERWÄRMUNG FRITZ DÜSSELDORF GmbH, D-79106 Freiburg (DE)
(72) Erfinder: Hanisch, Gustav, Dipl.-Ing., W-7311 Hochdorf (DE); Knecht, Alfred, Dipl.-Ing., W-7302 Ostfildern-Ruit (DE); Lüttke, Hilko, Dipl.-Ing., W-7300 Esslingen (DE); Naunapper, Dietmar, Dipl.-Ing., W-7800 Freiburg (DE)

(56) Entgegenhaltungen:
- DE-A- 3 135 879
- DE-A- 3 818 679
- DE-A- 4 029 724
- DE-C- 3 617 468
- DE-C- 3 623 119
- GB-A- 959 886

## Beschreibung

Die Erfindung betrifft ein Verfahren zum induktiven Randschichthärten von Haupt- oder Hublagerzapfen an Kurbelwellen nach der Einleitung von Anspruch 1 sowie eine entsprechende Einrichtung nach dem Oberbegriff von Anspruch 5, wie beide aus der DE-OS 38 18 679 als bekannt hervorgehen.

Bei dem dort beschriebenen Verfahren wird ein Kleinflächeninduktor mittels einer programmsteuerbaren mechanischen Zwangsführung der Oberfläche des Haupt- oder Hublagerzapfens einer rotierenden Kurbelwelle nachgeführt, wobei
- zum einen der Kopplungsabstand des Kleinflächeninduktors zur Oberfläche des zu härtenden Lagerzapfens und
- zum anderen die relative Höhenlage der Soll-Einwirkungsstelle des Induktors an der Werkstückoberfläche einerseits und der Arbeitspunkt des Kleinflächeninduktors andererseits während des Kurbelwellenumlaufes konstant gehalten werden.
Nachteilig an diesem Verfahren ist, daß Haupt- oder Hublagerzapfen von Kurbelwellen meist üblicher Bauert mit bis unmittelbar an das Zapfenende heranreichender Kurbelwange dennoch nicht gleichmäßig tief eingehärtet werden können, weil die über den Zapfenumfang hinweg ungleich verteilte Wangenmasse zu einem entsprechend großen axialen Wärmeabfluß und dementsprechend zu einer umfangsabhängig mehr oder weniger tiefen Einhärtung führt. Außerdem ist ein wahlweises Härten der Lagerzapfen bis in die Übergangsausrundung zur Kurbelwange hin nicht nicht möglich.

In der nicht vorveröffentlichten DE-OS 40 297 24 ist schon ein Verfahren und eine Vorrichtung vorgeschlagen worden, bei der ein Kleinflächeninduktor mittels einer programmsteuerbaren mechanischen Zwangsführung der Oberfläche des Haupt- oder Hublagerzapfens einer rotierenden Kurbelwelle nachgeführt wird, wobei der Kopplungsabstand des Kleinflächeninduktors zur Oberfläche des zu härtenden Lagerzapfens zyklisch verändert und dementsprechend die induktiv in den zu härtenden Lagerzapfen eingetragene Heizenergie variiert wird. Und zwar soll durch diese Veränderung der massebedingte, am Umfang der Zapfenoberfläche unterschiedlich große Warmeabfluß kompensiert werden. Durch eine solche Verfahrensweise ergibt sich eine Reihe von Vorteilen:
- es kann - wie gesagt - durch Kompensation des unterschiedlichen Wärmeabflusses eine gleichmäßige und gleichmäßig tiefe Zapfenerwärmung am gesamten Umfang erzielt werden,
- es können wesentlich höhere Rotationsgeschwindigkeiten als bei bisherigen Induktionshärteverfahren mit vom zu härtenden Zapfen geführten Induktoren zugelassen und dementsprechend wesentlich kürzere Heizzeiten erzielt werden,
- aufgrund der reduzierten Heizzeiten können auch geringere Einhärtetiefen realisiert und unerwünschte Härteverzüge vermieden werden,
- aufgrund der Verwendung von Kleinflächeninduktoren brauchen diese der Krümmung der Zapfenoberfläche nicht exakt angepaßt zu sein; vielmehr lassen sich mit ein und dem selben Kleinflächeninduktor Zapfen unterschiedlicher Durchmesser härten, wodurch die entsprechende Härtemaschine ohne Umrüstung zum Härten von unterschiedlichen Kurbelwellen geeignet und dementsprechend sehr flexibel einsetzbar ist,
- dank der Nachführung der Kleinflächeninduktoren entlang der Zapfenoberfläche ohne mechanische Abstützung auf ihr sind die bisher verwendeten Gleit- oder Abstützschuhe entbehrlich, die immer wieder Anlaß zu Störungen gegeben haben.

Aufgabe der Erfindung ist es, das gattungsgemäß zugrunde gelegte Verfahren bzw. die entsprechende Einrichtung dahingehend weiterzubilden, daß damit auch Kurbelwellen mit ungleicher Massenverteilung an den Zapfenenden gleichmäßig gehärtet werden können; außerdem sollen die Lagerzapfen ohne Umrüstung wahlweise gar nicht oder nur einerends oder beidends bis in den Bereich der Übergangsausrundung zur Kurbelwange hin gehärtet werden können.

Diese Aufgabe wird erfindungsgemäß bezuglich des Verfahrens durch die Merkmale von Anspruch 1 und bezüglich der Einrichtung durch die kennzeichnenden Merkmale von Anspruch 5 gelöst. Dank des gleichzeitigen Einsatzes von zwei unabhängig voneinander zwangsgeführten, an unterschiedlichen Umfangsstellen des Lagerzapens zum Einsatz gelangenden Kleinflächeninduktoren können alle, also auch durchmesser-unterschiedliche Lagerzapfen einer Kurbelwelle mit dem gleichen Paar von Kleinflächeninduktoren in universeller Weise verzugsfrei und mit vorgegebenem Härtebild einwandfrei gehärtet werden.

Zweckmäßige Ausgestaltungen der Erfindung können den Unteransprüchen entnommen werden. Im übrigen ist die Erfindung anhand eines in den Zeichnungen dargestellten Ausführungsbeispieles nachfolgend noch erläutert; dabei zeigen:
- Fig. 1:: eine Härtemaschine zur Ausübung des Verfahrens zum Härten einer Kurbelwelle,

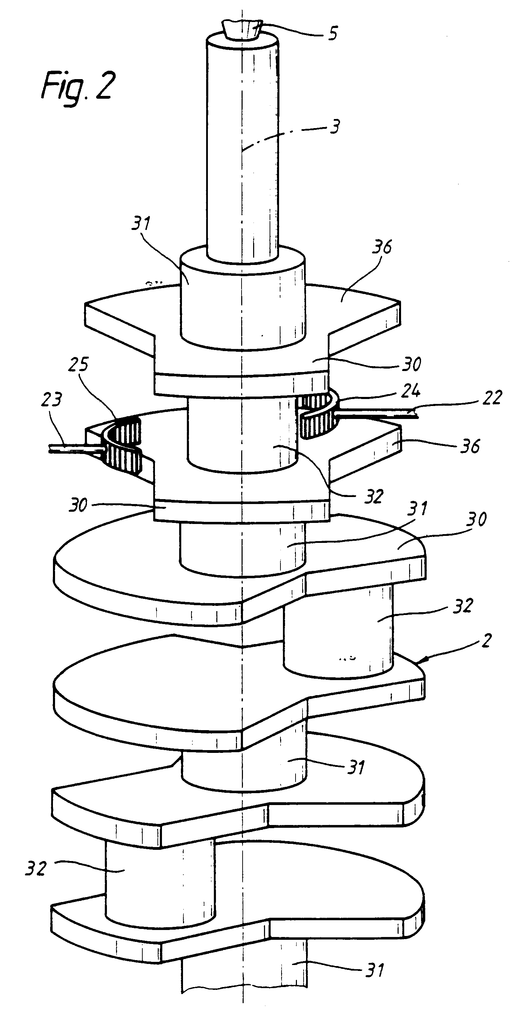

- Fig. 2:: einen vergrößerten Ausschnitt aus der Darstellung nach Figur 1,
- Fig. 3:: einen Querschnitt durch die Kurbelwelle nach Figur 4 entlang der Schnittlinie III-III,
- Fig. 4:: einen Ausschnitt aus der Kurbelwelle nach Figur 1 bzw. 2 in Seitenansicht,
- Fig. 5:: einen Querschnitt durch die Kurbelwelle nach Figur 4 entlang der Schnittlinie V-V und
- Fig. 6:: einen weiteren Querschnitt durch die Kurbelwelle nach Figur 1 bzw. Figur 2 durch einen Hublagerzapfen in vergrößerter Darstellung mit Veranschaulichung verschiedener Größen der Kurbelwelle bzw. von Arbeitsparametern beim Härten.

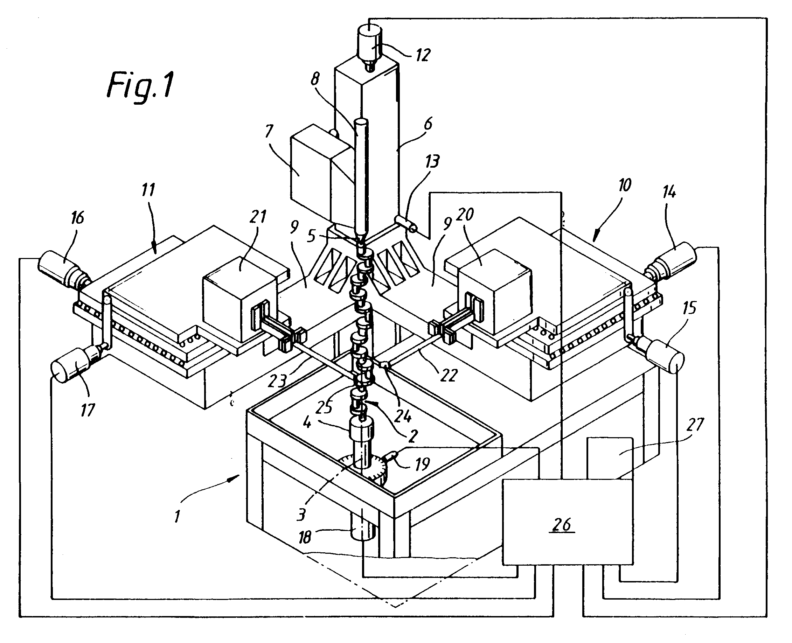

Die in Fig. 1 dargestellte Härtemaschine 1 weist unter anderem eine Führungssäule 6 auf, auf der eine Doppelkonsole 9 vertikal auf und ab beweglich geführt ist. Mittels eines Hubantriebes 12 kann die Doppelkonsole definiert angehoben bzw. abgesenkt und selbsttätig in der neuen Arbeitsposition wieder festgeklemmt werden. Über einen Lagedetektor 13 kann die tatsächliche Stellung der Doppelkonsole 9 in Relation zur Führungssäule 6 erfaßt und das entsprechende Lagesignal an eine Steuerung 26 weitergeleitet werden. Im Maschinenbett der Härtemaschine ist eine Arbeitsspindel mit Spannfutter 4 vorgesehen, in die eine Kurbelwelle 2 mit definierter Umfangslage und konzentrisch zu ihrer Rotationsachse 3, die gleichzeitig auch die Rotationsachse der Arbeitsspindel ist, aufgenommen werden. Die Arbeitsspindel ist mit einem Drehantrieb 18 versehen, der von der Steuerung 26 aus ansteuerbar ist. Außerdem ist die Drehlage der Arbeitsspindel und mithin die der Kurbelwelle 2 über eine Zahnscheibe und einen Drehlagedetektor laufend exakt erfaßbar; das entsprechende Drehstellungssignal wird ebenfalls an die Steuerung 26 weitergeleitet. Axial gegenüberliegend zur Arbeitsspindel mit dem Spannfutter 4 und fluchtend in Bezug auf die Rotationsachse 3 ist eine Pinole 8 mit Zentrierspitze 5 angeordnet, die über einen Pinolenhalter 7 ebenfalls an der Führungssäule 6 gehaltert ist. An den beiden Auslegern der Doppelkonsole 9 ist jeweils ein Kreuzschlitten 10 bzw. 11 angebracht, wobei jeder Einzelschlitten des Kreuzschlittens mit einem entsprechenden Schlittenantrieb 14 bzw. 15 beim Kreuzschlitten 10 sowie 16 bzw. 17 beim Kreuzschlitten 11 versehen ist. Auf dem jeweils oberen Einzelschlitten der beiden Kreuzschlitten 10 bzw. 11, der zweidimensional bewegbar ist, ist ein Transformator 20 bzw. 21 mit einer Einspannvorrichtung für einen Induktorhalter 22 bzw. 23 angebracht. Durch den Transformator 20 bzw. 21 wird die Stromart an die für das induktive Erwärmen optimalen Parameterwerte angepaßt. Am Außenende der erwähnten Halter 22 bzw. 23 sind jeweils Kleinflächeninduktoren 24 bzw. 25 angeordnet, auf die weiter unten noch näher eingegangen werden soll. An dieser Stelle sei lediglich erwähnt, daß die Kleinflächeninduktoren außer den bekannten Induktorschleifen und den Jochblechen zum Ausrichten des Magnetflußes in bestimmte Richtungen auch noch eine integrierte Wasserkühlung zur Kühlung der Induktionsschleifen und einen Brausekopf zum Abschrecken der erwärmten Werkstückoberfläche enthalten. Dies ist, weil allgemein bekannt und üblich, hier jedoch nicht näher dargestellt. Die erwähnte Steuerung 26 erhält über die entsprechenden Detektoren 13 und 19 und über hier nicht näher dargestellte Detektoren zur Stellungserfassung der Einzelschlitten der beiden Kreuzschlitten 10 und 11 exakte Meldung über die jeweilige Raumstellung der Kurbelwelle und der Kleinflächeninduktoren 24 und 25. Selbstverständlich ist auch noch eine elektronisch auswertbare Abfrage der jeweiligen Werkstückart bzw. Kurbelwellenart installiert, so daß die Maschinensteuerung auch hierüber eine datenverwertbare Information erhält. Ferner ist an die Steuerung 26 ein Speicher 27 angeschlossen, in welchem mehrere vorher erstellte Bewegungsprogramme zur exakten Bahnsteuerung der Kleinflächeninduktoren niedergelegt sind. Und zwar ist für jeden einzelnen Hauptlagerzapfen und jeden einzelnen Hublagerzapfen ein gesondertes Bewegungsprogramm im Speicher 27 abgelegt, die alle zuvor aufgrund optimierter Härteversuche erstellt worden sind. Dies ist in dem eingangs erwähnten älteren Vorschlag näher beschrieben und soll hier als bekannt vorausgesetzt werden.

Die Kurbelwelle 2 weist mehrere konzentrisch zur Rotationsachse 3 liegende Hauptlagerzapfen 31 auf, die beiderseitig in Kurbelwangen 30 übergehen, die jedoch bei den verschiedenen Hauptlagerzapfen in unterschiedliche radiale Richtungen weisen. Gegenüberliegend zu den Kurbelwangen 30 sind scheibenförmige Gegengewichte 36 angebracht. Zwischen den Kurbelwangen 30 sind exzentrisch zur Rotationsachse 3 liegende Hublagerzapfen 32 angeordnet, die einen geringeren Durchmesser d aufweisen als die in soweit stärkeren Hauptlagerzapfen 31 mit dem Durchmesser D.

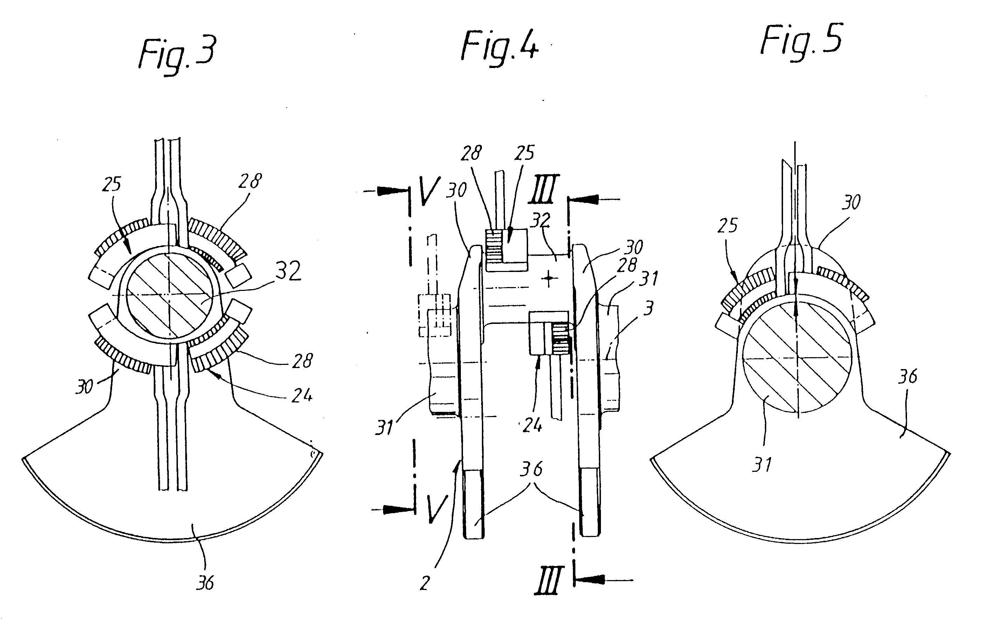

Die bereits mehrfach erwähnten Kleinflächeninduktoren 24 und 25 sind zwar in ihrer Arbeitsfläche kreisbogenförmig gekrümmt, jedoch sind sie nicht exakt dem jeweils zu bearbeitenden Lagerzapfen angepaßt, sondern die Krümmung entspricht dem größten zu härtenden Lagerzapfen, welches bei dem in den Figuren dargestellten Ausführungsbeispiel der Hauptlagerzapfen 31 ist. Die Gegenüberstellung von Figur 3 und 5 läßt erkennen, daß ein und derselbe Kleinflächeninduktor 25 sowohl zum Härten des Hauptlagerzapfens 31 (Figur 5) als auch zum Härten eines Hublagerzapfens 32 verwendet wird (Figur 3). Die Kleinflächeninduktoren arbeiten dabei ohne relative Abstützung zum Lagerzapfen. Vielmehr sind sie durch eine gesonderte mechanische Zwangsführung der Umfangsfläche des Lagerzapfens unter Einhaltung eines örtlich individuell vorgegebenen Kopplungsabstandes aₓ radial nachgeführt.

Bei einer anderen Ausgestaltung der Erfindung mit einen kleineren Umfangwinkel abdeckenden Induktoren kann der eine Kleinflächeninduktor auch in einem Winkel mit zum Beispiel einem Vorlauf oder Nachlauf von 90 Grad gegenüber dem anderen Kleinflächeninduktor angeordnet werden. Aber auch andere Winkel zwischen den beiden Kleinflächeninduktoren sind hierbei denkbar.

Jeweils einer der Kleinflächeninduktoren 24, 25 ist je einem axialen Ende des jeweils zu härtenden Lagerzapfen 31, 32 zugeordnet, wobei jeder Kleinflächeninduktor etwa die halbe axiale Erstreckung eines Lagerzapfens überdeckt. Eine gewisse "Überschneidung" der beiden Kleinflächeninduktoren im Bereich der axialen Zapfenmitte ist unschädlich, weil sich dadurch lediglich eine geringfügig größere und in soweit ohne weiteres tolerierbare Einhärtetiefe ergibt; bei einer kleinen Lücke zwischen den beiden Kleinflächeninduktoren aufgrund einer großen Zapfenlänge ergibt sich im Bereich der axialen Zapfenmitte eine leichte Einsattelung in der Einhärtetiefe, die ebenfalls meist zugelassen werden kann. Durch einseitig wirksame und an jeweils gegenüberliegenden Stirnseiten angebrachte Jochbleche 28 sind die beiden Kleinflächeninduktoren auch für eine axiale Ankopplung an den nächstliegenden ausgerundeten Übergang des Lagerzapfens 31, 32 in eine axial angrenzende Kurbelwange 30 ausgebildet. Der Umstand, ob und in welchem Ausmaß ein solcherart ausgebildeter Kleinflächeninduktor tatsächlich axial an die Übergangsausrundung ankoppelt, hängt im Wesentlichen vom eingestellten Axialabstand Induktor/Übergangsausrundung ab. Beim Härten ist jeder der Kleinflächeninduktoren zu der zugehörigen Übergangsausrundung jeweils in einen solchen axialen Abstand gebracht, daß je nach Härtevorschrift für den gerade zu härtenden Lagerzapfen der Kleinflächeninduktor dort axial ankoppelt und eine Härtung bewirkt oder nicht ankoppelt und die Übergangsausrundung ungehärtet läßt. Zwar sollen meist auch die Übergansausrundungen der Haupt- und der Hublagerzapfen mit gehärtet werden, jedoch wird häufig für einzelne Hauptlagerzapfen verlangt, daß eine der Übergangsausrundungen - in anderen Fällen auch beide - ungehärtet bleiben soll bzw. sollen. Durch zyklische Variation des axialen Koppelabstandes der Kleinflächeninduktoren an die Übergangsausrundung kann ebenfalls ein massebedingt unterschiedlicher Wärmeabfluß in die Kurbelwange 30 kompensiert werden und auf diese Weise für eine auch axial gleichmäßige Einhärtetiefe gesorgt werden. Zu diesem Zweck müssen die einzelnen Zwangsführungen für die Kleinflächeninduktoren allerdings mit einer zusätzlichen, in Richtung der Kurbelwellen- bzw. Rotationsachse 3 wirksamen Bewegungsachse für kleine Hübe ausgestattet sein, was jedoch nicht dargestellt ist.

Nachdem die Kleinflächeninduktoren 24 und 25 universell für alle Lagerzapfen, zumindest eines bestimmten Kurbelwellentypes einsetzbar sein sollen, die einzelnen Lagerzapfen 31 bzw. 32 jedoch axial unterschiedlich lang sein können, ist zum gleichmäßigen axialen Überdecken der Lagerzapfen die erwähnte Doppelanordnung von Kleinflächeinduktoren vorgesehen. Ein weiterer Grund dafür besteht darin, daß die umfangsmäßige Verteilung des Wärmebedarfes sich über die axiale Erstreckung hinweg verändert und daß demgemäß an dem einen axialen Ende eines Zapfens möglicherweise nach einem anderen Programm erwärmt werden muß als an dem anderen axialen Ende. Es kann deswegen u.U. zweckmäßig sein, den einen Kleinflächeninduktor axial mit einem anderen Bewegungsprogramm axial über die Mantelfläche des jeweils zu härtenden Lagerzapfens zyklisch hinweg zu bewegen als den anderen Kleinflächeninduktor. Dadurch kann bei geeigneter Abstimmung trotz unterschiedlicher Masseverteilungen an beiden axialen Endseiten eines Lagerzapfens und dementsprechend axial einerseits bzw. andererseits unterschiedlicher Wärmeabflüsse gleichwohl eine gleichmäßige Erwärmung auch in axialer Hinsicht erreicht werden.

Es kann deswegen zweckmäßig sein, den Kleinflächeninduktor axial mit einer relativ hohen Frequenz axial über die Mantelfläche des jeweils zu härtenden Lagerzapfens zu scannen, wobei die Frequenz dieser Axialschwingung mindestens dem Fünffachen der sekundlichen Umdrehungszahl der Kurbelwelle entsprechen sollte. Dadurch kann erreicht werden, daß auch mit einem relativ schmalen Kleinflächeninduktor ein längerer Lagerzapfen axial gleichmäßig und gleichzeitig erwärmt wird. Um nun außerdem dem Umstand Rechnung zu tragen, daß aufgrund unterschiedlicher Masseverteilungen an den axialen Endseiten eines Lagerzapfens die Erfordernisse für die Erwärmungsleistung nicht nur in Umfangsrichtung sondern auch axial unterschiedlich sind, kann der erwähnten Axialschwingung eine frequenzmäßig übereinstimmende kleinhubige Radialschwingung des Kleinflächeninduktors überlagert werden. Dadurch kann bei geeigneter Abstimmung erreicht werden, daß auch in axialer Hinsicht der Kopplungsabstand variiert und trotz axial unterschiedlicher Wärmeabflüsse gleichwohl eine gleichmäßige Erwärmung auch in axialer Hinsicht erreicht werden kann.

Alternativ zu dieser Möglichkeit einer axial gleichmäßigen Zapfenerwärmung trotz peripher und axial unterschiedlicher Wärmeabflüsse ist es auch denkbar, axial nebeneinander zwei gesonderte Kleinflächeninduktoren mit jeweils gesonderter Zwangsführung an einem Hublager-zapfen 32 einzusetzen, so daß also je Hublager-Doppelzapfen insgesamt vier Kleinflächeninduktoren mit insgesamt vier Zwangsführungen zum Einsatz kämen, was maschinenbaulich allerdings relativ aufwendig wäre. Selbstverständlich müßten die beiden an einem Hublager-zapfen 32 gleichzeitig zum Einsatz gelangenden Kleinflächeninduktoren umfangsmäßig versetzt angreifen.

Zum Nachführen der Kleinflächeninduktoren 24 und 25 ist eine mechanische Zwangsführung vorgesehen, die bei dem in Figur 1 dargestellten Ausführungsbeispiel jeweils in Form eines Kreuzschlittens 10 bzw. 11 mit den Antrieben 14 und 15 bzw. 16 und 17 ausgebildet ist. Es ist ohne weiteres auch denkbar, anstelle solcher Kreuzschlitten einen Knickarm nach Art eines Knickarmroboters zu verwenden. Durch geeignete flexible Gestaltung der Sekundärstromleiter in lamellierter Form kann der Transformator 20 bzw. 21 sogar ortsfest gehaltert werden, was die zu bewegenden Massen deutlich reduziert und der Bewegungsgenauigkeit und der Bewegungsgeschwindigkeit der mechanischen Zwangsführung zugute kommt. An den beweglichen, lamellierten Knickstellen der Sekundärleiter können diese mit einem flexiblen Schlauch ummantelt sein, wobei durch den dabei gebildeten Hohlraum Kühlwasser der lamellierten Knickstellen hindurchgeleitet werden kann. Die übrigen starren Teile der Sekundärleiter einer solchen Zwangsführung können wie üblich als rohrförmige Stromschienen ausgebildet sein, die mit Kühlwasser durchströmbar sind.

Eine Zwangsführung in Knickarmbauart könnte zweckmäßigerweise nach dem Storchschnabelprinzip aufgebaut sein, wobei ein mit der Kurbelwelle 2 synchron umlaufender und in der phasenmäßigen Zuordnung zu ihr veränderbarer Exzenterzapfen über das Storchschnabelgestänge am Außenende des solcherart aufgebauten Knickarmes Kreisbewegungen mit frei wählbarem Kreisdurchmesser und frei wählbarer Phasenzuordnung zur Kurbelwelle erzeugt. Die von der exakten Kreisbahn abweichenden, die ovale Bahnkurve 35 erzeugenden kleinen Hübe können dann dieser mechanisch vorgegebenen Grundbewegung radial überlagert werden, wofür nur kleine relative Bewegungsausschläge und entsprechend kleine trägheitsarme Antriebe erforderlich sind.

Unabhängig von der Bauart der mechanischen Zwangsführung muß sichergestellt sein, daß die von ihnen geführten Kleinflächeninduktoren wenigstens in der Radialebene des zu härtenden Lagerzapfens in zwei Freiheitsgraden beweglich geführt werden und daß für jeden Freiheitsgrad der Bewegung ein gesonderter Antrieb vorgesehen ist. Außerdem muß durch die mechanische Zwangsführung der jeweilige Kleinflächeninduktor punktgenau bahnsteuerbar sein. Der Bewegungsablauf muß frei programmierbar wie bei einem Industrieroboter sein. Das jeweilige Bewegungsprogramm muß dabei bedarfweise individuell aus einem Speicher 27 abrufbar sein.

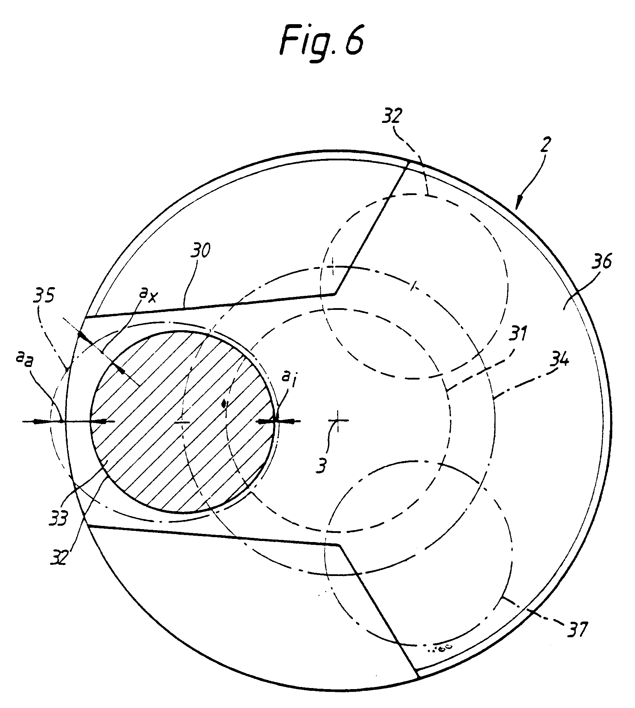

Aufgrund der erwähnten frei programmierbaren und punktgenau bahnsteuerbaren Zwangsführung der Kleinflächeninduktoren kann der Kopplungsabstand aₓ des Kleinflächeninduktors zur Oberfläche des zu härtenden Zapfens gezielt variiert werden. In Figur 6 ist durch den Kurvenzug 35 der Verlauf des Kopplungsabstandes über den Umfang eines Hublagerzapfens 32 angedeutet, wobei jedoch aus Gründen der besseren Darstellbarkeit die Abstandswerte in ihrer Änderung stark übertrieben gezeichnet sind. Nachdem auf der der Rotationsachse 3 zunächst liegenden Innenseite der Wärmeverlust durch die Kurbelwange 30 und zum benachbart liegenden Hauptlagerzapfen 31 am größten ist, muß an diesem Umfangsbereich des Hublager-zapfens 32 besonders viel Wärme eingetragen werden, um den überdurchschnittlichen Wärmeabfluß zu kompensieren. Aus diesem Grunde ist auf der Innenseite der Kopplungsabstand aᵢ besonders gering und dementsprechend der Wärmeeintrag besonders groß. Auf der gegenüberliegenden, also außenliegenden Umfangsseite des Hublager-zapfens 32 verhält es sich mit dem Wärmeabfluß gerade umgekehrt; dort ist der massebedingte Wärmeabfluß aus dem Hublager-zapfen 32 besonders gering, weshalb dort der Kopplungsabstand aₐ besonders groß und dementsprechend der Wärmeeintrag besonders gering ist. In den dazwischenliegenden Umfangsbereichen wird der Kopplungsabstand aₓ entsprechend verandert. Es kommt erschwerend hinzu, daß über die Erwärmungszeit hinweg dei Kurbelwelle such erwärmungsbedingt vorübergehend verzieht und dadurch der Kurbelkreis 34 in verzogenem Zustand gegenüber dem Konstruktionswert vorübergehend größer werden kann. Dies müßte durch eine zeitliche Veränderung der Bahnsteuerung berücksichtigt werden. Teilweise können diese Einflüsse auch durch ein primärseitiges Verändern des Leistungsangebotes berücksichtigt werden. Allerdings ist diese Steuerung relativ träge und sie muß mit einer gewissen Vorhaltzeit angesteuert werden.

Die Bahnsteuerung wird unabhängig von der Art der mechanischen Zwangsführung über ein Bewegungsprogramm bewirkt, das in der Steuer- und Speicherschaltung 27 abgelegt ist. Diese beinhaltet eine Anzahl von zusammenwirkenden Steuerprogramm, deren Zahl und Art von der Anzahl der anzusteuernden Kleinflächeninduktoren 24, 25 abhängt. Bei zwei Kleinflächeninduktoren 24 und 25 kann das Bewegungsprogramm im Zusammenspiel mit der Zwangsführung bewirken, daß die z.B. diametral einander gegenüber angeordneten Kleinflächeninduktoren 24 und 25 im Gegentakt an die Oberfläche des Hublager-zapfens 32 herangeführt werden, so daß im von dem einen Kleinflächeninduktor 24 abgedeckten halbschaligen Umfangsbereich durch einen geringen Kopplungsabstand viel Wärme eingetragen wird, wohingegen der andere halbschalige Umfangsbereich des anderen Kleinflächeninduktors 25 mit wenig Wärme beaufschlagt wird.

Diese Steuerung kann zudem in Abhängigkeit von der axialen Lage der Kleinflächeninduktoren 24 und 25 an einer Kurbelwange 30 eingestellt werden. Dabei wird im Gegen- oder im Gleichtakt in den Bereichen des großen Wärmeabflusses in der Nähe des Hauptlagerzapfens 31 der Kopplungsabstand sehr gering gewählt. Bei einem Gleichtaktbetrieb, d.h. bei dem gleichzeitigen Einstellen eines niedrigen Koppelabstandes für beide Kleinflächeninduktoren 24 und 25, wird die Leistungsversorgung der Härtemaschine naturgemäß stärker belastet als beim Gegentaktbetrieb.

Die Steuerung ist bei der Wahl anderer, unsymmetrischer Winkelanordnungen der Kleinflächeninduktoren 24, 25 zueinander auch dahingehend einstellbar, daß durch einen Vor- oder Nachlauf der Induktoren ein Wärmeverzug des randschichtzuhärtenden Elementes kompensiert wird.

Bei der Kurbelwelle 2 werden die Haupt- und Hublagerzapfen 31 und 32 durch zwei gesonderte gleichzeitig zum Einsatz gelangende Kleinflächeninduktor 24 und 25 gehärtet. Für jeden Kleinflächeninduktor 24 und 25 ist eine separate mechanische Zwangsführung der geschilderten Art vorgesehen. Die beiden Kleinflächeninduktoren 24 und 25 sind dabei an unterschiedlichen Umfangsstellen des jeweiligen Lagerzapfens 31 bzw. 32 angeordnet; und zwar greifen sie beim dargestellten Ausführungsbeispiel an diametral gegenüberliegenden Umfangsstellen an. Während der Induktor 24 quer an dem zugehörigen Halter 22 angebracht ist, erstreckt sich der Induktor 25 mit einer etwa mittig liegenden Tangente in der Verlängerung des entsprechenden Halters 23.

Es kann aus Gründen eines geringeren eigengewichtsbedingten Wärmeverzuges der Kurbelwelle günstiger sein, die Kurbelwelle während des Härtens horizontal zu lagern. Dabei kann es weiterhin von Vorteil sein, wenn die Kurbelwelle wenigstens einmal an einem Hauptlagerzapfen 31 mittels einer Stützlünette abgestütz wird.

## Patentansprüche

1. Verfahren zum Randschichthärten von Haupt- oder Hublagerzapfen an Kurbelwellen durch oberflächennahes induktives Erwärmen der Lagerzapfen bis oberhalb einer Umwandlungstemperatur und anschließendes Abschrecken,
- bei dem durch Rotation der Kurbelwelle die Umfangsfläche des jeweils zu härtenden Lagerzapfens an einem Kleinflächeninduktor vorbeibewegt und im gesamten zu härtenden Oberflächenbereich annähernd gleichzeitig und gleichmäßig erwärmt wird,
- wobei der Kleinflächeninduktor ohne relative Abstützung zum Lagerzapfen durch eine gesonderte mechanische Zwangsführung der Umfangsfläche des Lagerzapfens unter Einhaltung eines vorgegebenen Kopplungsabstandes radial nachgeführt wird,
- die den Kleinflächeninduktor dabei führende mechanische Zwangsführung ist
- wenigstens in der Radialebene des Lagerzapfens in zwei Freiheitsgraden beweglich,
- für jeden Freiheitsgrad gesondert antreibbar und insgesamt punktgenau bahnsteuerbar,
- im Bewegungsablauf frei programmierbar,
- wobei das Bewegungsprogramm für jeden einzelnen Lagerzapfen bedarfsweise individuell aus einem Speicher für eine größere Anzahl von Bewegungsprogrammen abrufbar ist,
mit folgenden weiteren Merkmalen:
- die Haupt- oder Hublagerzapfen (31, 32) werden mit zwei gesonderten, gleichzeitig und jeweils an unterschiedlichen Umfangsstellen zum Einsatz gelangenden Kleinflächeninduktoren (24, 25) gehärtet, die jeweils gesondert mechanisch zwangsgeführt sind (Kreuzschlitten 10 bzw. 11),
- jeweils einer der Kleinflächeninduktoren (24, 25) wird je einem axialen Ende des jeweils zu härtenden Lagerzapfen (31, 32) zugeordnet, wobei jeder Kleinflächeninduktor (24, 25)
- etwa die halbe axiale Erstreckung eines Lagerzapfens (31, 32) überdeckt und
- für eine axiale Ankopplung an den nächstliegenden ausgerundeten Übergang des Lagerzapfens (31, 32) in eine axial angrenzende Kurbelwange (30) - im Folgenden kurz "Übergangsausrundung" genannt - ausgebildet ist
und wobei jeder der Kleinflächeninduktoren (24, 25) zu der zugehörigen Übergangsausrundung jeweils in einen solchen axialen Abstand gebracht wird, daß je nach Härtevorschrift für den gerade zu härtenden Lagerzapfen (31, 32) der Kleinflächeninduktor (24, 25) dort axial ankoppelt und eine Härtung bewirkt oder nicht ankoppelt und die Übergangsausrundung ungehärtet läßt,
- mittels im Bewegungsprogramm implizierter, gezielt umfangs- und/oder zeitabhängiger Veränderung des radialen und/oder axialen Kopplungsabstandes (aₓ) wird die Energiezufuhr durch den Kleinflächeninduktor (24, 25) in die Oberfläche des Lagerzapfens (31, 32) und/oder in die Übergangsausrundung in der Weise beeinflußt, daß trotz eines vorübergehenden, erwärmungsbedingten Verzuges der Kurbelwelle als ganzer und einer radialen und/oder axialen Temperaturdehnung des jeweils zu erwärmenden Lagerzapfens (31, 32) und/oder trotz eines umfangsmäßig ungleichen Wärmeabflusses zu axial angrenzenden Masseteilen (Kurbelwangen 30) der Lagerzapfen (31, 32) über den gesamten Umfang hinweg oberflächennah gleichmäßig erwärmt wird.

2. Verfahren nach Anspruch 1,
**dadurch gekennzeichnet,**
daß die an einem Lagerzapfen (31, 32) gleichzeitig zum Einsatz gelangenden Kleinflächeninduktoren (24, 25) etwa diametral gegenüberliegend an ihm angreifen.

3. Verfahren nach Anspruch 1,
**dadurch gekennzeichnet,**
daß die horizontal angeordnete Kurbelwelle (2) während des Härtens an wenigstens einem Hauptlagerzapfen (31) mittels einer Stützlünette abgestützt wird.

4. Verfahren nach Anspruch 1,
**dadurch gekennzeichnet,**
daß die umfangs- und/oder zeitabhängige Veränderung des Kopplungsabstandes (aₓ) dadurch erreicht wird, daß der der Oberfläche des zu härtenden Lagerzapfens (31, 32) folgenden Bewegung des zwangsgeführten Kleinflächeninduktors (24, 25) eine frequenz- und phasenmäßig definiert und gleichbleibend zugeordnete kleinhubige Radial- und/oder Axialschwingung in der Weise überlagert wird, daß der Kleinflächeninduktor (24, 25) an denjenigen Axialpositionen und/oder Umfangsstellen, an denen der Wärmeabfluß in angrenzende Werkstückmassen überdurchschnittlich groß ist, der Kopplungsabstand des Kleinflächeninduktor (24, 25) zur Zapfenoberfläche gegenüber dem mittleren Kopplungsabstand reduziert ist und umgekehrt.

5. Einrichtung zum Randschichthärten von Haupt- oder Hublagerzapfen an Kurbelwellen durch oberflächennahes induktives Erwärmen der Lagerzapfen bis oberhalb einer Umwandlungstemperatur und anschließendes Abschrecken,
- mit einem die Kurbelwelle an einem Ende in definierter Umfangslage aufnehmenden, drehbar gelagerten und mit stets kontrollierter Umfangslage drehantreibbaren Spannfutter sowie mit einer andernends an der Kurbelwelle ansetzbaren Zentrierspitze,
- ferner mit einem Kleinflächeninduktor, der ohne relative Abstützung zum Lagerzapfen der Kurbelwelle durch eine gesonderte mechanische Zwangsführung der Umfangsfläche des Lagerzapfens unter Einhaltung eines vorgegebenen Kopplungsabstandes radial nachführbar ist,
- die den Kleinflächeninduktor dabei führende mechanische Zwangsführung ist
- wenigstens in der Radialebene des Lagerzapfens in zwei Freiheitsgraden beweglich,
- für jeden Freiheitsgrad gesondert antreibbar und insgesamt punktgenau und umfangs- bzw. phasenmäßig der Kurbelwelle exakt zugeordnet bahnsteuerbar,
- im Bewegungsablauf frei programmierbar,
- wobei das Bewegungsprogramm für jeden einzelnen Lagerzapfen bedarfsweise individuell aus einem Speicher für eine größere Anzahl von Bewegungsprogrammen abrufbar ist,
zur Ausübung des Verfahrens nach Anspruch 1,
**gekennzeichnet durch** die Gemeinsamkeit folgender Merkmale:
- es sind für einen zu härtenden Haupt- oder Hublagerzapfen (31, 32) der Kurbelwelle zwei gesonderte, vorzugsweise etwa diametral gegenüberliegend angeornete, gleichzeitig und jeweils an unterschiedlichen Umfangsstellen zum Einsatz gelangenden Kleinflächeninduktoren (24, 25) und entsprechend zwei gesonderte mechanische Zwangsführungen (Kreuzschlitten 10 bzw. 11) vorgesehen,
- jeweils einer der Kleinflächeninduktoren (24, 25) ist je einem axialen Ende des jeweils zu härtenden Lagerzapfen (31, 32) zugeordnet, wobei jeder Kleinflächeninduktor (24, 25)
- etwa die halbe axiale Erstreckung eines Lagerzapfens (31, 32) überdeckt und
- für eine axiale Ankopplung an den nächstliegenden ausgerundeten Übergang des Lagerzapfens (31, 32) in eine axial angrenzende Kurbelwange (30) ausgebildet ist.

## Claims

1. A process for the skin-hardening of crank main journals or crank pins on crankshafts by means of the near-surface inductive heating of the journals or crank pins to above a transformation temperature followed by quenching,
- in which, through the rotation of the crankshaft, the outer surface of the journals or crank pins to be hardened moves past a small-area inductor and the whole section to be hardened is heated approximately simultaneously and evenly,
- whereby the small-area inductor is moved radially without support in relation to the journal or crank pin by means of a special mechanical guide on the outer surface of the journal or crank pin at a predetermined contact distance,
- the mechanical guide which guides the small-area inductor
- is movable in two degrees of freedom in at least the radial plane of the journal or crank pin,
- can be moved separately for each degree of freedom and continuous-path-controlled together with pinpoint accuracy,
- is freely programmable in its path of movement,
- whereby, if required, the movement program for each individual journal or crank pin can be retrieved from a memory for a larger number of movement programs,
with the following, additional characteristics:
- the crank main journals or crank pins (31, 32) are hardened by two separate small-area inductors (24, 25), operating simultaneously on different sections of their surfaces, which are guided separately by mechanical means (cross slides 10 and 11),
- each of the small-area inductors (24, 25) is aligned with one axial end of the journal or crank pin to be hardened (31, 32), whereby each small-area inductor (24, 25)
- covers approximately half the axial length of a journal or crank pin (31, 32) and
- is designed to contact axially with the nearest outwardly curved journal or crank pin (31, 32) transition piece, into an axially adjacent crank web (30) - hereinafter referred to as the "curved transition piece" for short,
and whereby each of the small-area inductors (24, 25) is brought to the corresponding curved transition piece at such an axial distance that, depending on the hardness specifications for the journal or crank pin to be hardened (31, 32), the small-area inductor (24, 25) either contacts it axially and carries out the hardening process or does not and leaves the curved transition piece unhardened,
- due to the specific surface- and/or time-determined modification of the radial and/or axial contact distance (aₓ) contained in the movement program, the supply of energy to the surface of the journal or crank pin (31, 32) and/or the curved transition piece is influenced by the small-area inductor (24, 25) in such a way that, despite the temporary heat distortion of the crankshaft as a whole and the radial and/or axial temperature expansion of the journal or crank pin to be hardened (31, 32), and/or despite an uneven loss of heat from the surface to axially adjacent solid parts (crank web 30), the entire surface (31, 32) of the journals or crank pins is evenly near-surface heated.

2. A process in accordance with claim 1
**characterised in that** the small-area inductors (24, 25) acting simultaneously on the journal or crank pin (31, 32) act upon it from diametrically opposite positions.

3. A process in accordance with claim 1,
**characterised in that** during the hardening process the horizontally positioned crankshaft (2) is supported on at least one crank main journal (31) through a supporting rest.

4. A process in accordance with claim 1,
**characterised in that** the surface- and/or time-determined modification of the contact distance (aₓ) is achieved by the fact that a frequency- and phase-defined, constant small-stroke radial and/or axial vibration is combined with the movement of the guided small-area inductor (24, 25) following the surface of the journal or crank pin (31, 32) to be hardened in such a way that, in relation to the small-area inductor (24, 25), at those axial positions and/or points on the surface where heat loss is greater than average, the contact distance between the small-area inductor (24, 25) and the surface of the journal or crank pin is less than the average contact distance, and vice versa.

5. A device for the skin-hardening of crank main journals or crank pins on crankshafts by means of the near-surface inductive heating of the journals or crank pins to above a transformation temperature followed by quenching,
- with a pivoted clamping chuck rotatable with a constantly controlled position on the surface which holds the crankshaft in a certain position on the surface at one end and with a locating centre which can be attached to the crankshaft at the other end,
- furthermore with a small-area inductor which can move radially without support in relation to the journal or crank pin on the crankshaft by means of a separate mechanical guide on the outer surface of the journal or crank pin at a predetermined contact distance,
- the mechanical guide guiding the small-area inductor
- is movable in two degrees of freedom in at least the radial plane of the journal or crank pin,
- can be moved separately for each degree of freedom and continuous-path controlled together,
- is freely programmable in its path of movement,
- whereby, if required, the movement program for each individual journal or crank pin can be retrieved from a memory for a larger number of movement programs,
to perform the process in accordance with claim 1,
**characterised by** the following common characteristics:
- for one journal or crank pin (31, 32) to be hardened on the crankshaft there are two separate small-area inductors (24, 25), preferably located approximately diametrically opposite one another, acting simultaneously on different sections of the surface and correspondingly two separate mechanical guides (cross slides 10 and 11),
- each of the small-area inductors (24, 25) is aligned with one axial end of the journal or crank pin (31, 32) to be hardened, whereby each small-area inductor (24, 25)
- covers approximately half the axial length of a journal or crank pin (31, 32) and
- is designed to contact axially with the nearest outwardly curved journal or crank pin (31, 32) transition piece, into an axially adjacent crank web (30).

## Revendications

1. Procédé pour la trempe superficielle de tourillons principaux ou de tourillons pour bielles dans des vilebrequins par chauffage par induction du tourillon, à proximité de sa surface, jusqu'au-dessus d'une température de transformation et par brusque refroidissement ultérieur,
- procédé dans lequel, par rotation du vilebrequin, la surface périphérique du tourillon respectif à tremper est déplacée devant un inducteur pour petites surfaces et chauffée approximativement simultanément et uniformément dans toute la zone superficielle à tremper,
- l'inducteur pour petites surfaces étant guidé radialement, sans soutien relatif par rapport au tourillon, par un système mécanique de guidage forcé particulier de la surface périphérique du tourillon en maintenant un espacement d'activation prédéterminé,
- le système mécanique de guidage forcé assurant le guidage de l'inducteur pour petites surfaces est
- déplaçable au moins dans le plan radial du tourillon avec deux degrés de liberté,
- dans chaque degré de liberté, susceptible d'être entraîné de façon particulière et d'être commandé en trajectoire dans l'ensemble de déplacement, exactement, avec une précision point par point, librement programmable quant au déroulement de son mouvement,
- le programme de mouvement pour chaque tourillon particulier pouvant si nécessaire être extrait individuellement d'une mémoire contenant un grand nombre de programmes de mouvement,
- le procédé comportant les autres caractéristiques suivantes :
- les tourillons principaux ou les tourillons pour bielles (31, 32) sont trempés au moyen de deux inducteurs distincts pour petites surfaces (24, 25) opérant simultanément et respectivement sur des zones périphériques différentes et qui sont soumis chacun à un guidage mécanique forcé propre (chariots en croix 10 et 11),
- respectivement un des inducteurs pour petites surfaces (24, 25) est associé à une extrémité axiale du tourillon respectif à tremper (31, 32), chaque inducteur pour petites surfaces (24, 25)
- recouvrant à peu près la moitié de la dimension axiale d'un tourillon (31, 32) et
- pour un couplage axial avec la zone de transition arrondie immédiatement adjacente du tourillon (31, 32), étant conformé selon une joue de manivelle axialement adjacente (30) - appelée dans la suite succinctement "arrondi de transition", et chacun des inducteurs pour petites surfaces (24, 25) étant amené par rapport à l'arrondi de transition associé à un espacement axial qui est tel que, en fonction de la prescription de trempe du tourillon précisément à tremper (31, 32), l'inducteur pour petites surfaces (24, 25) soit rendu axialement actif dans cette zone et produise une trempe ou bien ne soit pas rendu actif et laisse l'arrondi de transition non trempe,
- au moyen d'une modification de l'espacement d'activation radiale et/ou axiale (aₓ) intervenant dans le programme de mouvement et dépendant de façon ciblée du pourtour et/ou du temps, l'introduction d'énergie par l'inducteur (24, 25) dans la surface du tourillon (31, 32) et/ou dans l'arrondi de transition est influencée de manière que, malgré une déformation temporaire, résultant de l'échauffement, du vilebrequin dans son ensemble et également d'une dilatation thermique radiale et/ou axiale du tourillon correspondant à chauffer (31, 32) et/ou malgré une transmission circonférentielle inégale de chaleur à des parties axialement adjacentes (joues de manivelle 30), le tourillon (31, 32) soit chauffé uniformément à proximité de sa surface sur tout le pourtour.

2. Procédé selon la revendication 1, caractérisé en ce que les inducteurs pour petites surfaces (24, 25) opérant simultanément sur un tourillon (31, 32) agissent sur lui à peu près dans des positions diamétralement opposées.

3. Procédé selon la revendication 1, caractérisé en ce que le vilebrequin (2) disposé horizontalement est soutenu au moyen d'une lunette de soutien pendant la trempe effectuée au moins sur un tourillon (31).

4. Procédé selon la revendication 1, caractérisé en ce que la modification de l'espacement d'activation (aₓ) en fonction du pourtour et/ou du temps est effectuée par le fait que le mouvement de suivi de la surface du tourillon à tremper (31, 32), par l'inducteur pour petites surfaces (24, 25) soumis à un guidage forcé est combiné avec une oscillation radiale et/ou axiale de petite course, définie en fréquence et en phasage et restant constante, de manière que l'inducteur pour petites surfaces (24, 25) soit disposé dans des positions axiales et/ou des zones circonférentielles dans lesquelles la transmission de la chaleur à des parties adjacentes de la pièce s'effectue à un degré supérieur à la moyenne et que l'espacement d'activation de l'inducteur pour petites surfaces (24, 25) par rapport à la surface du tourillon soit réduit par rapport à l'espacement moyen d'activation, et inversement.

5. Dispositif pour la trempe superficielle de tourillons principaux et de tourillons pour bielles dans des vilebrequins par chauffage par induction des tourillons à proximité de leurs surfaces jusqu'au-dessus d'une température de transformation et par brusque refroidissement ultérieur, dispositif comportant :
- un mandrin de serrage recevant le vilebrequin à une extrémité dans une disposition circonférentielle définie, monté de façon tournante et pouvant être entraîné en rotation avec une disposition circonférentielle constamment contrôlée, ainsi qu'une pointe de centrage pouvant être adaptée au vilebrequin, à l'autre extrémité,
- en outre un inducteur pour petites surfaces, qui peut être guidé radialement, sans soutien relatif par rapport au tourillon du vilebrequin, au moyen d'un système mécanique de guidage forcé particulier de la surface périphérique du tourillon, en maintenant un espacement d'activation prédéterminé,
- le système mécanique de guidage forcé assurant le guidage de l'inducteur pour petites surfaces est
- déplaçable au moins dans le plan radial du tourillon avec deux degrés de liberté,
- dans chaque degré de liberté, susceptible d'être entraîné de façon particulière et être commandé en trajectoire de déplacement, dans l'ensemble, exactement avec une précision point par point et en correspondance avec le pourtour ou le phasage du vilebrequin,
- librement programmable quant au déroulement de son mouvement,
- le programme de mouvement pour chaque tourillon particulier pouvant être si nécessaire extrait individuellement d'une mémoire contenant un grand nombre de programmes de mouvement,
en vue de la mise en oeuvre du procédé selon la revendication 1,
dispositif caractérisé par l'ensemble des particularités suivantes :
- il est prévu, pour un tourillon principal ou un tourillon pour bielle (31, 32) à tremper dans le vilebrequin, deux inducteurs pour petites surfaces (24, 25), distincts, disposés avantageusement à peu près dans des positions diamétralement opposées et opérant simultanément et respectivement dans deux zones périphériques différentes, et en correspondance deux systèmes mécaniques distincts de guidage forcé (chariots en croix 10 et 11),
- respectivement un des inducteurs pour petites surfaces (24, 25) est associé à une extrémité axiale respective du tourillon respectif à tremper (31, 32), chaque inducteur pour petites surfaces (24, 25)
- recouvrant à peu près la moitié de la dimension axiale d'un tourillon (31, 32) et
- étant conformé selon une joue de manivelle axialement adjacente (30) en vue d'une sollicitation axiale de la transition arrondie adjacente du tourillon (31, 32).
